# EUROPÄISCHE PATENTSCHRIFT

(11) **EP 0 418 985 B1**
(45) Veröffentlichungstag und Bekanntmachung des Hinweises auf die Patenterteilung: **20.07.1994**
(21) Anmeldenummer: 90202507.1
(22) Anmeldetag: 21.09.1990
(51) Int. Cl.: A01D 33/10, A01D 19/16

(54) **Erntewagen, insbesondere für Zwiebel-, Knollen- oder Wurzelgewächse, wie Zuckerrüben**
Harvesting vehicle, especially for onions, bulbous or tuberous plants like sugarbeets
Chariot de récolte, en particulier pour oignons, plantes bulbeuses ou tubéreuses comme des betteraves à sucre

(30) Priorität: 22.09.1989 NL 8902380
(43) Veröffentlichungstag der Anmeldung: 27.03.1991
(73) Patentinhaber: Hack, Bernardus Antonius Maria, NL-4756 SE Kruisland (NL); Hack, Wilhelmus Cornelis Elizabeth, NL-4756 SE Kruisland (NL)
(72) Erfinder: Hack, Bernardus Antonius Maria, NL-4756 SE Kruisland (NL); Hack, Wilhelmus Cornelis Elizabeth, NL-4756 SE Kruisland (NL)
(74) Vertreter: Boelsma, Gerben Harm, Ir.

(56) Entgegenhaltungen:
- BE-A- 899 287
- DE-A- 2 457 175
- DE-C- 528 931
- FR-A- 2 368 874
- FR-A- 2 552 299

## Beschreibung

Die Erfinding bezieht sich auf einen Erntewagen nach dem Oberbegriff des Anspruchs.

Ein derartiger Erntewagen ist aus der FR-A-2552299 bekannt. Bei diesem bekannten Erntewagen sind zwischen einer vorne liegenden Stelle, wo die Produkte aus dem Boden gehoben werden, und etwa der Mitte des Raumes zwischen den beiden Räderpaaren eine Längsreihe von fünf einander nach hinten überlappenden drehbaren Rostsheiben vorge

Von diesen Rostscheiben können die ersten drei Rostscheiben als "erster Förderer" im Sinne des Obergriffs des Anspruchs betrachtet werden während die vierte Rostscheibe und die fünfte Rostscheibe zusammen als "rotierende Reinigungsvorrichtung" zu betrachten sind. Dabei sind die vierte Rostscheibe und die fünfte Rostscheibe bezw. als "erste, um eine etwa senkrechte Achse drehbare scheibenförmige Erdedurchlassende Fang- und Trag-fläche" und "zweite Erde-durchlassende Tragfläche" zu betrachten. Dabei liegen die Drehachsen dieser zwei Tragflächen in der Fortbewegungsrichtung des Erntewagens hintereinander.

Obschon durch die bekannte Reinigungsvorrichtung grosse Mengen Erde, die am Anfang an den aufgegrabenen Produkten haften bleiben, freigemacht und entfernt werden, ist die Menge Resterde an den Produkten trotzdem verhaltnismässig gross.

In Ansehung der Tatsache, dass der Netto-Gewichtspreis pro Tonne gelieferte Rüben umso höher ist je nachdem die Rüben sauberer, d.h. mit weniger anhaftender Erde geliefert werden, ist es für den Gebraucher der Erntemaschine wichtig, dass die aufgegrabenen Rüben so sauber wie möglich zum Sammelbehälter geführt werden.

Die Erfindung hat sich zur Aufgabe gestellt die bekannte Vorrichtung, was die reinigende Wirkung anbelangt, zu verbessern.

Erfindungsgemäss wird diese Aufgabe dadurch gelöst, dass die Achsen der ersten Tragfläche und der zweiten Tragfläche etwa quer zur Fortbewegungsrichtung des Wagen nebeneinander angeordnet sind und koaxial unter der ersten Tragfläche eine dritte drehbare Tragfläche angeordnet ist, die in einer niedrigeren Höhe als die zweiten Tragfläche angeordnet ist um die geernten Produkte von der zweiten Tragfläche zu übernehmen, wobei in der Bewegungsbahn jeder Tragfläche Führungsmittel vorgesehen sind, die die geernten Produkte jeweils nach einem etwa kompletten Rundgang auf der betreffenden Tragfläche zur nächsten Tragfläche beziehungsweise zum zweiten Förderer albleiten.

Durch die erfindungsgemässen Massnahmen ist die Strecke, über die die aufgegrabenen Produkte bezw. Rüben - unter fortwährendem Drehen über- und durcheinander - über eine Erde-durchlassende rostartige Tragfläche bewegt werden bevor sie abgeführt werden, erheblich länger geworden, was zu einer erheblichen Reduzierung der letztlich an den Rüben haften-bleibenden Menge Resterde führt. Dabei wird der Raum zwischen den beiden Räderpaaren zum Reinigen optimal ausgenutzt.

Zu bemerken ist, dass aus der BE-A-899287 ein Erntewagen bekannt ist wobei zwischen einem ersten Förderer und einem zweiten Förderer ein Paar von einander teilweise überlappenden Erde-durchlassenden und rotierenden Tragflächen vorgesehen ist, wobei in der Bewegungsbahn jeder Tragfläche Führungsmittel vorgesehen sind um die geernten Produkte von der einem Tragfläche auf die zweite bezw. von der zweiten Tragfläche auf den zweiten Förderer abzuleiten.

Es fehlt hier jedoch eine dritte, koaxial zur ersten Tragfläche angeordnete Tragfläche, während auch bei dieser bekannten Vorrichtung die Achsen der beiden Tragflächen weitgehend hintereinander statt nebeneinander liegen.

Die Erfindung wird unten an Hand der Zeichnung mit eine Ausführungsbeispiel näher erläutert.
Fig. 1 ist eine schematische Seitenansicht des Erntewagens nach der Erfindung und
Fig. 2 ist eine Ansicht, schräg von oben, in der Fortbewegungsrichtung des Wagens gesehen, wobei nur das vordere Räderpaar des Wagens gezeigt wird.

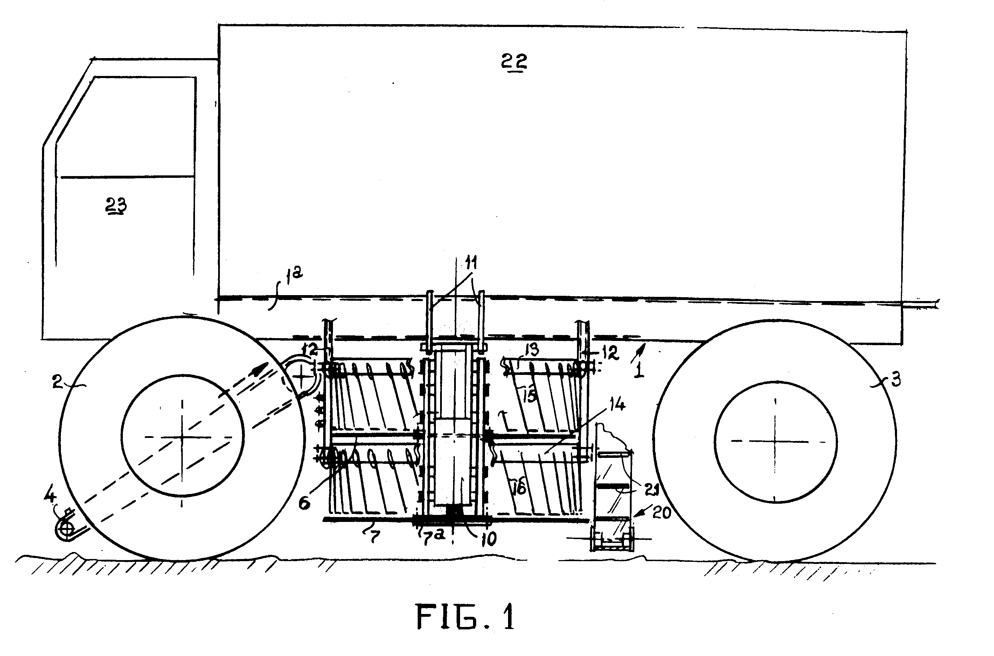

Der in der zeichnung dargestellte Erntewagen, zum Beispiel eine Selbstfahrende Rüben-Erntevorrichtung, hat ein Rahmen 1 mit einem vorderen und einem hinteren Rädersatz 2 bezw. 3. Aus Fig. 1 ist ersichtlich, dass die Rahmen-Träger 1a verhältnissässig hoch über den Wellen der Rädersätze 2 und 3 verlaufen.

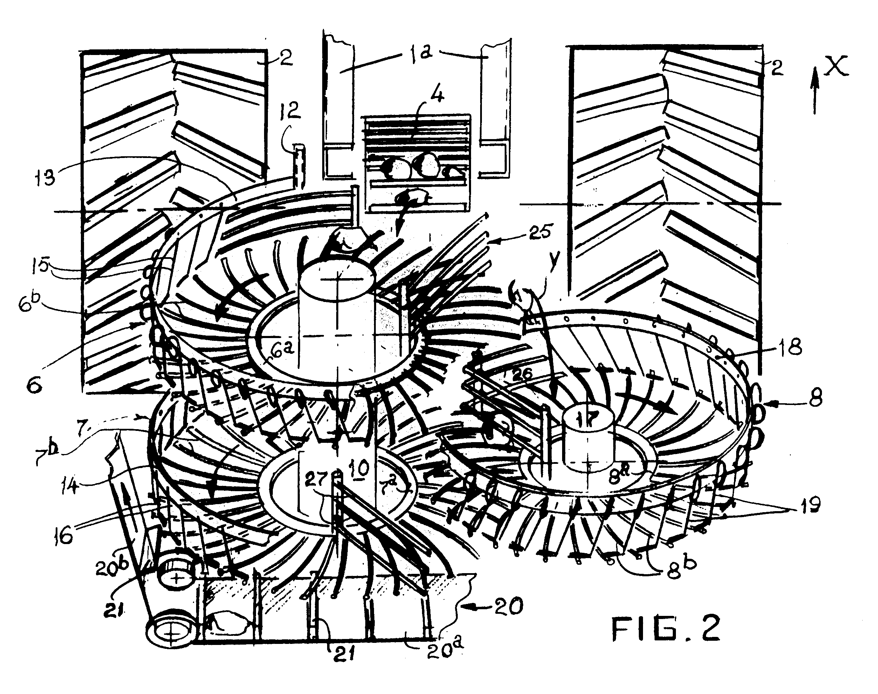

Ab einer Stelle gerade über dem Boden an der Vorderseite des Wagens (links in Fig. 2) führt ein Förderer 4 zu einer Stelle gerade hinter dem vorderen Rädersatz 2 und gerade unter den Rahmen-Trägern 1a. Der Förderer 4 erstreckt sich dabei zwischen den beiden Vorderrädern 2 hindurch. In Betrieb ist an der Vorderseite des Wagens eine in der Zeichnung nicht näher dargestellte Erntemaschine, insbesondere ein sogenannter Rübenheber montiert, mit Hilfe dessen Rüben aus nebeneinander liegenden Reinen aus dem Boden gehoben werden. Der Förderer 4 hat die Aufgabe die aus dem Boden ausgegrabenen Rüben aufzunehmen und zum Raum unter den Rahmen-Trägern 1a, zwischen den vorderen und hinteren Rädersätzen 2 und 3 zu fördern. In diesem Raum befindet sich die erfindungsgemässe Vorrichtung, die mit dem allgemeinen Bezugziffer 5 bezeichnet ist. Diese Vorrichtung beseht aus einer Anordnung von bei koachsial übereinander liegenden und um eine senkrechte Welle drehbaren Erde-durchlassenden Scheinen 6 und 7 (Fig. 1 und 2) und einer in einem bestimmten Abstand seitlich mit Bezug auf diese versetzt liegenden dritten Erde-durchlassenden Scheibe 8 (Fig. 2).

Die Erde-durchlassenden Scheinen 6, 7 und 8 werden je in bekannter Weise durch eine(n) Nabenring bezw. Nabenplatte 6a, 7a und 8a und eine Anzahl von diesem (dieser) etwa radial ausragenden, mit ihren freien Enden einigermassen nacheilend angeordneten stangenförmigen Speichen 6b, 7b und 8b gebildet. Die beiden Nabenringe 6a und 7a sind miteinander verbunden durch einen aus einer Anzahl von achsial Stäben und Umfangsringen gebildeten Verbindungskäfig 9, der den als Antriebs-quelle für die Scheiben 6 und 7 dienenden Hydromotor 10 umgibt. Der Hydromotor 10 ist dabei mit Befestigungsbügeln 11 (Fig. 1) in einer etwa exzentrischen Lage (Fig. 2) an den Rahmen-Trägern 1a fest aufgehängt, während der Scheibensatz 6, 7 über den unteren Nabenring 7a auf dem nach unten gerichteten freien Wellenende des Hydromotors 10 befestigt ist.

Die Scheinen 6 und 7 bilden die Grundflächen von zwei koachsial übereinander liegenden zylindrischen Aufnahme- und Förderräumen für die von dem Förderer 4 angeführten Ernteprodukte , die von anhaftender Erde befreit werden sollen. Diese zylindrischen Aufnahmeräume werden über einen Teil ihres Umfangs (und zwar an der linken Seite, wenn beobachtet in Fig. 2) begrenst durch an Stäben 12 aufgehängten stationären, kreisförmigen Ringe 13 bezw. 14 und von diesen herunterhängenden, etwa schräg in der Drehrichtung der Scheinen 6 bezw. 7 nach unten gerichteten drahtförmigen Zinken 15 bezw. 16. Der Abstand zwichen den Zinken 15 bezw. 16 ist so bemessen, dass sie die von den ausgegrabenen Produkten (Rüben) freikommende Erde auswärts hindurchlassen, aber die Produkte selbst in ihre kreisförmige Förderbahn halten.

Die dritte Erde-durchlassende Scheibe 8 liegt mit dem stangenförmigen Stichen 8b in einer Ebene, die gerade über derjenigen der Stichen 7b der unteren Scheibe der beiden anderen Erde-durchlassenden Scheinen 6 und 7 liegt. Dabei überlappen sich die Stichen 8b und 7b in eine Mass, der auf der Verbindungslinie zwischen den Achsen der Scheinen 7 und 8 nahezu der wirksamen Speichenlänge entspricht.

Der Nabenrind 8a der dritten Scheibe 8 ist in einer Weise ähnlich wie oben mit Bezug auf die Befestigung des Nabenringes 7a beschrieben wurde, am freien, nach unteren gerichteten Wellenende eines zweiten Hydromotors 17 befestigt, der als Antriebsquelle für die Scheibe 8 dient. Die Scheibe 8 bildet ebenfalls die Grundfläche eines zylindrischen Aufnahme- und Förderraumes für die zu reinigenden Ernteprodukte, welcher Raum über den grössten Teil seines Umfangs nach aussen begrenst wird durch einen stationären Ring 18 mit von diesem herunterhängenden, etwa schräg in der Bewegungsrichtung der Scheibe 8 gerichteten drahtförmigen Zinken 19. Der Hydromotor 17 ist in einer in der Zeichnung nicht veranschaulichten weise an den Rahmen-Trägern 1b fest montiert.

An der rechten Seite der unteren der beiden Erde-durchlassenden Scheinen 6 und 7 befindet sich ein in der Zeichnung als Bandförderer gezeigter zweiter Förderer 20, dessen untere waagerechte strecke 20b unter der Ebene der Scheibe 7 liegt. Der Förderer 20 ist dabei mit Mitnehmern 21 versehen, die die auf den Förderer 20 angelegten gereinigten Ernteprodukte mitnehmen können und über eine ansteigende Strecke 20b des Förderers hochführen können.

über dem Rahmen 1 befindet sich der Sammelraum 22 für die gereinigten Produkte (Rüben), welcher Raum an der Vorderseite durch das mit 23 bezeichnete Führerhaus begrenzt wird und an dessen hintere Seite sich die in der Zeichnung nicht näher veranschaulichte Kraftquelle befindet, die die Hydromotore 10 und 17 und die weiter benötigten Antriebsvorrichtungen, wie diejenige für die Förderer 4 und 20, speist.

Die Wirkungsweise der beschriebenen Vorrichtung ist folgende.

Im Betrieb werden die ausgegrabenen Produkte (Rüben) in einer der Fortbewegungsrichtung X entgegengesetzten Richtung durch den Förderer 4 dem Aufnameraum über der oberen Scheibe 6 zugeführt, welche Scheibe, in Fig. 2 gesehen, gegen uhrzeigersinn umläuft. Die von der Scheibe 6 aufgenommenen Rüben werden über eine kreisförmige Bewegungsbahn von nahezu 360 Grad mitgenommen, bis sie auf eine in der Bewegungsbahn der Scheibe 6 angordnete Führung 25 stossen, welche die Rüben radial nach aussen ableitet, wodurch diese auf den seenrecht darunter liegenden Teil der dritten Scheibe 8 fallen (siehe Pfeil y in Fig. 2). Die Scheibe 9 nimmt die auf sie gefallenen Rüben in der Pfeilrichtung mit, bis sie, abermals nach dem Zurücklegen eines kreisförmigen Transportwegs von praktisch 360 Grad, auf eine zweite, in der Bewegungsbahn der Scheibe 8 angeordnete Führung 26 stossen und radial von der betreffenden Scheibe 8 abgeleitet werden und auf die untere (7) der beiden koachsialen Scheinen 6 und 7 gelangen. Auf dieser letzten Scheibe 7 wird von den Rüben abermals einen grossen Teil eines kreisförmigen Transportwegs zurückgelegt, bevor sie durch eine in der Transportbahn dieser letzten Scheibe angeordnete stationäre Führung 27 zu dem zweiten Förderer 20 abgeleitet werden, der die Rüben auf eine nicht naher zu beschreibende Weise zum Sammelraum 22 abführt.

Bei ihrem Rundgang auf jeder der Scheinen 6, 7 und 8, werden die Rüben intensiv bewegt, wobei die Rüben über und durcheinander bewegen, und eine immer anwachsende Menge von anhaftender Erde freigemacht wird, die darauf zwischen den radial ausragenden Speichen der betreffenden Scheibe hindurch entweichen kann. Im Vergleich zu der bekannten Vorrichtung dieser Art ist der Transportweg, die von den Rüben durch die erfindungsgemässe Reinigunsvorrichtung zurückgelegt wird, wenigstens um das Vierfache verlängert worden und werden wesentlich sauberere Rüben in den sammelraum 22 geführt.

## Patentansprüche

1. Erntewagen, insbesondere für Zweibel-, Knollen- oder Wurzelge-wächse, wie Zuckerrüben, versehen mit einem Rahmen (1) mit einem vorderen (2) und einem hinteren Räderpaar (3) und einem zum Raum zwischen den beiden Räderparen (2, 3) führenden ersten Förderer (4) für geernte Produkte, in welchem Raum eine die geernten Produkte vom ersten Förderer (4) aufnemende und diese an einem zweiten, zu einem obenliegenden Sammelbehälter (22) führenden Förderer (20) abgebende, rotierende Reinigungsvorrichtung (5) vorgesehen ist, welche Vorrichtung eine scheibenförmige, um eine etwa senkrechte Achse drehbare, Erde-durchlassenden Fang- und Tragfläche (6) für die geernte Produkte aufweist, welche Tragfläche (6) mit einer in einer niedrigeren Höhe und seitlich überlappend mit Bezug auf die angeordneten zweiten drehbaren Tragfläche (8) zusammenarbeitet, in der Weise, dass die geernten Produkte von der ersten Tragfläche (6) zur weiteren Förderung auf die zweite Tragfläche (8) abgegeben werden, dadurch gekennzeichnet, dass die Achsen der ersten Tragfläche (6) und der zweiten Tragfläche (8) etwa quer zur Forthbewegungsrichtung des Wagen nebeneinander angeordnet sind und koaxial unter der ersten Tragfläche (6) eine dritte drehbare Tragfläche (7) angeordnet ist, die in einer niedrigeren Höhe als die zweiten Tragfläche (8) angeordnet ist um die geernten Produkte von der zweiten Tragfläche (8) zu übernehmen, wobei in der Bewegungsbahn jeder Tragfläche Führungsmittel vorgesehen sind, die die geernten Produkte jeweils nach einem etwa kompletten Rundgang auf der betreffenden Tragfläche zur nächsten Tragfläche beziehungsweise zum zweiten Förderer ableiten.

## Claims

1. Harvesting carriage, in particular for root crops, bulbous or tuberous plants, such as sugar beets, comprising a frame (1) with a front (2) and a rear wheel pair (3) and a first conveyor (4) for harvested products that leads towards the space between the two wheel pairs (2, 3), a rotatable cleaning device (5) being provided within said space to receive the harvested products from said first conveyor (4) and to deliver said products onto a second conveyor (20) which leads to an upper collecting tank (22), said device comprising a disc-shaped soil-permeable receiving and supporting surface (6) for the harvested products, said surface being mounted for rotation about a substantially vertical axis and cooperates with a second rotatable supporting surface (8) which is positioned at a lower level and in lateral overlapping relationship with the former, such that the harvested products are delivered from said first supporting surface (6) to said second supporting surface (8) for further transport, characterized in that the axes of said first supporting surface (6) and said second supporting surface (8) are positioned side by side as seen in a direction transversely to the travelling direction of the carriage and that a third rotatable supporting surface (7) is positioned coaxially under said first supporting surface (6), said third supporting surface being positioned at a lower level than said second supporting surface (8) to receive the harvested products from said second supporting surface (8), guide means being provided in the travelling path of each supporting surface adapted to cause the harvested products - upon having moved through a complete turn on the respective supporting surface - to move to the next supporting surface or to the second conveyor respectively.

## Revendications

1. Chariot de récolte, en particulier pour des plantes à oignons, à bulbes ou tubéreuses, telles que des betteraves à sucre, pourvu d'un châssis (1) comportant un train de roues avant (2) et arrière (3), et un premier convoyeur (4) pour les produits récoltés menant à l'espace situé entre les deux trains de roues (2, 3), espace dans lequel est prévu un dispositif de nettoyage rotatif (5) gui reçoit les produits récoltés du premier convoyeur (4) et les envoie à un deuxième convoyeur (20) menant à un bac de collecte (22) situé au dessus, lequel dispositif de nettoyage comporte une surface de réception et de support (6) perméable à la terre en forme de disque pour les produits récoltés pouvant tourner autour d'un axe approximativement vertical, cette surface de support (6) agissant conjointement avec une deuxième surface de support (8) rotative disposée à une hauteur moindre que la première et la chevauchant latéralement, de sorte que les produits récoltés soient déposés de la première surface de support (6) sur la deuxième surface de support (8) pour la suite de leur transport, caractérisé en ce que les axes de la première surface de support (6) et de la deuxième surface de support (8) sont disposés l'un à côté de l'autre a peu près transversalement au sens de déplacement du chariot, et en ce qu'est disposée coaxialement, au-dessous de la première surface de support (6), une troisième surface de support (7) rotative, laquelle est à une hauteur moindre que la deuxième surface de support (8) afin de reprendre les produits récoltés à partir de la deuxième surface de support (8), des moyens de guidage étant prévus dans l'emprise d'action de chacune des surfaces de support et évacuant respectivement les produits récoltés vers la surface de support suivante ou vers le deuxième convoyeur après un passage complet sur la surface de support concernée.
